# EUROPEAN PATENT APPLICATION

(11) **EP 4 443 554 A1**
(43) Date of publication of application: **09.10.2024**
(21) Application number: 22952305.5
(22) Date of filing: 27.07.2022
(51) Int. Cl.: H01M 4/36, H01M 4/58, H01M 10/0525

(54) **SECONDARY BATTERY, BATTERY MODULE, BATTERY PACK AND ELECTRIC DEVICE**

(71) Applicant: Contemporary Amperex Technology (Hong Kong) Limited, Central, Central And Western District (HK)
(72) Inventor: DONG, Miaomiao, Ningde, Fujian 352100 (CN); OUYANG, Shaocong, Ningde, Fujian 352100 (CN); BIE, Changfeng, Ningde, Fujian 352100 (CN); LIU, Hongyu, Ningde, Fujian 352100 (CN); NI, Huan, Ningde, Fujian 352100 (CN); FU, Chenghua, Ningde, Fujian 352100 (CN); SUN, Xin, Ningde, Fujian 352100 (CN)
(74) Representative: Ziebig Hengelhaupt Intellectual Property Attorneys Patentanwaltskanzlei PartGmbB
(86) International application number: PCT/CN2022/108185
(87) International publication number: WO 2024/020841

(57) **Abstract**

The present application provides a secondary battery, a battery module, a battery pack, and an electrical device. The secondary battery includes a positive electrode plate, a negative electrode plate, and a separator disposed between the positive electrode plate and the negative electrode plate, in which the positive electrode plate comprises a positive electrode coating containing a positive electrode active material comprising a lithium iron phosphate material and a conjugated carbonyl compound. In a discharge process of the secondary battery, in addition to a discharge plateau of the lithium iron phosphate material, a discharge curve further includes a relatively low discharge plateau provided by the conjugated carbonyl compound. Therefore, in the discharge process, voltage decreases with an increase of discharged capacity, and a trend of voltage decrease is relatively smooth; as a result the discharge capacity can increase stably and power performance of the secondary battery can be improved.

## Description

### TECHNICAL FIELD

The present application relates to the field of batteries, in particular to a secondary battery, a battery module, a battery pack, and an electrical device.

### BACKGROUND

Secondary batteries have characteristics of high capacity, long service life, and the like, and therefore, have been widely used in electronic devices, such as mobile phones, notebook computers, scooters, electric vehicles, electric airplanes, electric ships, electric toy cars, electric toy ships, electric toy planes, and electric tools.

With increasingly wide use of batteries, requirements for performances of secondary batteries are increasingly stringent. In order to improve the performances of the secondary batteries, materials such as positive electrode active materials in the secondary batteries are usually optimized and improved. However, currently, when the improved positive electrode active materials are applied to the secondary batteries, the power performance of the secondary batteries cannot be effectively improved during use.

### SUMMARY

The present application is based on the foregoing topic and aims to provide a secondary battery, a battery module, a battery pack, and an electrical device.

A first aspect of the present application provides a secondary battery. The secondary battery comprises a positive electrode plate, a negative electrode plate, and a separator disposed between the positive electrode plate and the negative electrode plate, wherein the positive electrode plate comprises a positive electrode coating containing a positive electrode active material comprising a lithium iron phosphate material and a conjugated carbonyl compound..

In the secondary battery of the present application, the lithium iron phosphate material has a higher a discharge plateau voltage, which enables the secondary battery to release higher energy. The conjugated carbonyl compound has a lower discharge plateau voltage than the lithium iron phosphate material. Moreover, in a low state of charge (SOC), the conjugated carbonyl compound can contribute the capacity and alleviate the voltage decay. In a specific SOC, the maximum discharge power contributes more capacity due to the plateau region of the conjugated carbonyl compound. In this case, the current increases and the voltage decay slows down, leading to an improvement in power performance. The combination of the lithium iron phosphate material and the conjugated carbonyl compound can enable the secondary battery to have a relatively low discharge plateau provided by the conjugated carbonyl compound in the discharge curve in addition to the discharge plateau of the lithium iron phosphate material in the discharge process. Therefore, in the discharge process, the voltage decreases with the increase of the discharge capacity, and the trend of voltage decrease is relatively smooth, so that the discharge capacity can increase stably and power performance of the secondary battery can be improved.

In some embodiments, based on a total mass of the positive electrode active material, a mass percentage of the conjugated carbonyl compound is denoted as a%, wherein 2% ≤ a% ≤ 13%, and optionally, 3% ≤ a% ≤ 10%.

Therefore, in the present application, when the mass percentage a% of the conjugated carbonyl compound is within the above range, the conjugated carbonyl compound can share in a part of current in the discharge process, which can significantly extend the discharge plateau of the positive electrode active material, further smoothen the trend of voltage decrease, and further improve the power performance of the secondary battery; and the addition amount of the conjugated carbonyl compound can be coordinated with the amount of lithium supplemented to the negative electrode plate, thereby effectively improving electrochemical performance of the secondary battery.

In some embodiments, on a discharge curve of the positive electrode plate relative to graphite at a discharge rate of 0.33 C, a ratio of a discharge plateau capacity of the lithium iron phosphate material to a total discharge capacity of the positive electrode active material is W₁, and 80% ≤ W₁ ≤ 99%; and/or on a discharge curve of the positive electrode plate relative to graphite at a discharge rate of 0.33 C, a ratio of a discharge plateau capacity of the conjugated carbonyl compound to a total discharge capacity of the positive electrode active material is W₂, and 1% ≤ W₂ ≤ 20%.

Therefore, in the present application, the ratio W₁ of the discharge plateau capacity of the lithium iron phosphate material can be adjusted by adjusting a mass percentage of the lithium iron phosphate material relative to the positive electrode active material, so that the positive electrode active material can be flexibly controlled as required. Correspondingly, the ratio W₂ of the discharge plateau capacity of the conjugated carbonyl compound can be adjusted by adjusting the mass percentage of the conjugated carbonyl compound relative to the positive electrode active material, so that the positive electrode active material can be flexibly controlled as required.

In some embodiments, a discharge curve of the lithium iron phosphate material relative to graphite at the discharge rate of 0.33 C has a discharge plateau voltage V₁ in V, and 3.2 ≤ V₁ ≤ 3.45.

Therefore, in the present application, when the lithium iron phosphate material is added to the secondary battery as a component of the positive electrode active material, a lower discharge cut-off voltage of the secondary battery is about 2.5 V at 25°C and 2.0 V below 10°C, which is more beneficial to the synergistic effect of the conjugated carbonyl compound at lower temperatures, enables the discharge plateau of the conjugated carbonyl compound to further smoothen the discharge curve in the discharge process to improve the power performance of the secondary battery, and is also beneficial for the conjugated carbonyl compound to contribute capacity to increase the discharge capacity and a discharge capacity retention rate.

In some embodiments, a discharge curve of the conjugated carbonyl compound relative to graphite at the discharge rate of 0.33 C has a discharge plateau voltage of V₂ in V, and 1.9 ≤ V₂ ≤ 2.9.

Therefore, in the present application, when the conjugated carbonyl compound is added to the secondary battery as a component of the positive electrode active material, the discharge curve can be further smoothened in the discharge process to improve the power performance of the secondary battery, and the conjugated carbonyl compound can contribute capacity to increase the discharge capacity and the discharge capacity retention rate.

In some embodiments, the conjugated carbonyl compound includes one or more of a quinone compound or salt thereof, a conjugated carboxyl compound or salt thereof, a diimide salt, a dianhydride compound, and a rhodizonate; optionally, the quinone compound or salt thereof includes one or more of benzoquinone, anthraquinone, phenanthrenequinone, 1,4-dibenzoquinonylbenzene, 2,3,5,6-tetrachloro-1,4-benzoquinone, 2,5-dimethoxybenzoquinone, 1,3,4-trihydroxyanthraquinone, 1,5-dilithiumoxyanthraquinone, dipyridinobenzoquinone, dithiophenobenzoquinone, difuranobenzoquinone, nonylbenzohexaquinone, 5,7,12,14-pentaphenyltetraone, and 2,5-dihydroxybenzoquinone dilithium salt; the conjugated carboxyl compound or salt thereof includes one or more of terephthalic acid, 2,4-dialkenyladipic acid, vinyl dibenzoic acid, terephthalate lithium salt, 2,4-dialkenyladipate lithium salt, and vinyl dibenzoate lithium salt; the diimide salt includes a diphenylenetetramethylene diimide dilithium salt and/or a naphthalene tetramethylene diimide dilithium salt; the dianhydride compound includes one or more of pyromellitic anhydride, naphthalene tetracarboxylate dianhydride, and perylene tetracarboxylate dianhydride; and the rhodizonate includes rhodizonic acid dilithium salt and/or rhodizonic acid tetralithium salt. The foregoing conjugated carbonyl compound has lower molecular weight and higher specific capacity.

In some embodiments, the negative electrode plate comprises a negative electrode film containing a negative electrode active material comprising one or more of artificial graphite, natural graphite, soft carbon, hard carbon, a silicon-based material, a tin-based material, lithium titanate, and a lithium-aluminum alloy.

In some embodiments, the negative electrode plate further comprises a lithium supplement layer disposed on the negative electrode coating.

In the present application, because the conjugated carbonyl compound almost does not contain a lithium element, a lithium source cannot be provided. Therefore, the lithium supplement layer is disposed on the negative electrode plate to provide a lithium source in the present application. In addition, a lithium supplement amount of the lithium supplement layer may be correlated with a mass of the conjugated carbonyl compound, so that on the one hand the lithium supplement layer provides the appropriate amount of lithium supplementation, and on the other hand, it will not lead to an excessive amount of lithium supplementation amount, which would otherwise impose a safety burden on the production process.

A second aspect of the present application further provides a battery module, comprising the secondary battery according to any embodiment of the first aspect of the present application.

A third aspect of the present application further provides a battery pack, comprising the battery module according to the embodiment of the second aspect of the present application.

A fourth aspect of the present application further provides an electrical device, comprising the secondary battery according to any embodiment of the first aspect of the present application, the battery module according to the embodiment of the second aspect of the present application, or the battery pack according to the embodiment of the third aspect of the present application.

### DESCRIPTION OF THE DRAWINGS

In order to explain the technical solutions of the embodiments of the present application more clearly, the following will briefly introduce the drawings that need to be used in the embodiments of the present application. Obviously, the drawings described below are only some embodiments of the present application. A person of ordinary skill in the art can obtain other drawings based on the drawings without creative work.
Fig. 1 is a schematic diagram of an embodiment of a secondary battery of the present application.
Fig. 2 is an exploded schematic diagram of an embodiment of the secondary battery in Fig. 1.
Fig. 3 is a schematic diagram of an embodiment of a battery module of the present application.
Fig. 4 is a schematic diagram of an embodiment of a battery pack of the present application.
Fig. 5 is an exploded schematic diagram of an embodiment of the battery pack shown in Fig. 4.
Fig. 6 is a schematic diagram of an embodiment of an electrical device including the secondary battery of the present application as a power source.

The drawings are not drawn to actual scale.

The references in the figures are specified as follows:
1. Battery pack; 2. Upper box body; 3. Lower box body; 4. Battery module;
5. Secondary battery; 51. Shell; 52. Electrode assembly;
53. Cover plate; and
6. Electrical device.

### DETAILED DESCRIPTION

Hereinafter, embodiments of a secondary battery, a battery module, a battery pack, and an electrical device of the present application will be explained in detail. However, unnecessary detailed explanations may be omitted. For example, detailed explanations of well-known matters and repeated explanations of actually identical structures are omitted. This prevents the following explanations from becoming unnecessarily lengthy and facilitates understanding of those skilled in the art. In addition, the accompanying drawings and the following explanations are provided for those skilled in the art to fully understand the present application and are not intended to limit the subject matter of the claims.

The "range" disclosed in the present application is defined in the form of a lower limit and an upper limit. A given range is defined by selecting a lower limit and an upper limit, and the selected lower limit and upper limit define the boundaries of a particular range. The range defined in this way can include or exclude end values, and can be combined arbitrarily, that is, any lower limit can be combined with any upper limit to form a range. For example, if a range of 60-120 and 80-110 is listed for a specific parameter, it is understood that a range of 60-110 and 80-120 is also expected. In addition, if minimum range values 1 and 2 are listed, and if maximum range values 3, 4 and 5 are listed, the following ranges can all be expected: 1-3, 1-4, 1-5, 2-3, 2-4 and 2-5. In the present application, unless otherwise specified, the numerical range "a-b" represents an abbreviation of any combination of real numbers between a and b, where both a and b are real numbers. For example, the numerical range "0-5" represents all real numbers "0-5" listed herein, and "0-5" is only an abbreviation of a combination of these values. In addition, when a parameter is expressed as an integer ≥ 2, it is equivalent to disclosing that the parameter is, for example, an integer 2, 3, 4, 5, 6, 7, 8, 9, 10, 11, 12, etc.

Unless otherwise specified, all the embodiments and optional embodiments of the present application can be combined with each other to form new technical solutions. Unless otherwise specified, all the technical features and optional features of the present application can be combined with each other to form new technical solutions.

Unless otherwise specified, all the steps of the present application can be carried out sequentially or randomly, but preferably carried out sequentially. For example, the method includes steps (a) and (b), which represents that the method may include steps (a) and (b) performed sequentially, or may include steps (b) and (a) performed sequentially. For example, the method may further include step (c), which represents that step (c) may be added to the method in any order, for example, the method may include steps (a), (b) and (c), or steps (a), (c) and (b), or steps (c), (a) and (b).

Unless otherwise specified, the expressions "comprise" and "include" mentioned in the present application are open-ended or close-ended. For example, the expression "comprise" and "include" may comprise or include other components that are not listed, or comprise or include only the listed components.

Unless otherwise specified, in the present application, the term "or" is inclusive. For example, the phrase "A or B" represents "A, B, or both A and B". More specifically, any of the following conditions satisfies the condition "A or B": A is true (or exists) and B is false (or does not exist); A is false (or does not exist) and B is true (or exists); or both A and B are true (or exist).

In the present application, the terms "a plurality of" and "a plurality of types of" and "more" refer to two or more than two.

Positive electrode active materials include various materials. Lithium iron phosphate compounds have been widely studied and applied due to their advantages such as high capacity and good cycle performance. As intercalation compounds and providers of active lithium ions, the lithium iron phosphate compounds maintain a relatively long discharge plateau in a discharge process, which is beneficial to ensuring power performance of secondary batteries. In charge and discharge processes, the intercalation or de-intercalation of lithium ions may be accompanied by a phase transition of the positive electrode active materials, which corresponds to a relatively flat potential plateau in charge and discharge curves. However, in a late stage of discharge, a sharp decrease in the plateau leads to a decrease in the power performance of the secondary batteries to deteriorate a discharge capacity. In the charge and discharge processes of the lithium iron phosphate compounds, there is a transition between a rhombic system of lithium iron phosphate and a hexagonal system of iron phosphate. Due to the coexistence of the two in the form of a solid solution below 200°C, there is no obvious two-phase turning point in the charge and discharge processes. Therefore, the charge and discharge voltage plateau of the lithium iron phosphate compounds is long and stable. However, in the late stage of discharge, the plateau sharply decreases, resulting in poor power performance.

In view of this, the inventor improved the positive electrode active materials from the perspective of extending the discharge plateau, so as to improve the power performance and discharge capacity of the secondary batteries. Next, the technical solutions of the present application will be described in detail.

### Secondary battery

In a first aspect, the present application provides a secondary battery, comprising a positive electrode plate, a negative electrode plate, and a separator disposed between the positive electrode plate and the negative electrode plate, wherein the positive electrode plate comprises a positive electrode coating containing a positive electrode active material comprising a lithium iron phosphate material and a conjugated carbonyl compound.

Although the mechanism is not very clear, the inventors have found that in the secondary battery of the present application, the lithium iron phosphate material has a higher discharge plateau voltage, which enables the secondary battery to release higher energy. The conjugated carbonyl compound has a lower discharge plateau voltage than the lithium iron phosphate material. Moreover, in a low state of charge (SOC), the conjugated carbonyl compound can contribute the capacity and alleviate the voltage decay. In a specific SOC, the maximum discharge power contributes more capacity due to the plateau region of the conjugated carbonyl compound. In this case, the current increases and the voltage decay slows down, leading to an improvement in power performance. The combination of the lithium iron phosphate material and the conjugated carbonyl compound can enable the secondary battery to have a relatively low discharge plateau provided by the conjugated carbonyl compound in the discharge curve in addition to the discharge plateau of the lithium iron phosphate material in the discharge process. Therefore, in the discharge process, the voltage decreases with the increase of the discharge capacity, and the trend of voltage decrease is relatively smooth, so that the discharge capacity can increase stably and power performance of the secondary battery can be improved. In some embodiments, SOC is from 3% to 20%. A specific range of SOC is related to the addition amount and gram capacity of the conjugated carbonyl compound.

The discharge plateau voltage of the positive electrode active material has a well-known meaning in the art. It represents the voltage value corresponding to half of the discharge capacity of the positive electrode active material. The discharge plateau voltage may be tested using methods known in the art. As a specific example, the positive electrode plate may be prepared from a positive electrode active material to be tested, and forms a test battery with a counter electrode. The test battery is fully charged and discharged within a charge and discharge voltage range, a changing curve of the discharge capacity of the battery relative to the voltage (also known as a discharge curve) is drawn, to obtain the voltage corresponding to half of the discharge capacity, namely, the discharge plateau voltage.

During testing, the counter electrode may be an electrode known in the art as a negative electrode of the secondary battery. For example, the counter electrode may be a metal lithium sheet, a graphite electrode, or a graphite counter electrode. The positive electrode plate, the counter electrode, and the test battery may be prepared with reference to national standards or industry norms. Taking the test of the discharge plateau voltage of the lithium iron phosphate material as an example, the lithium iron phosphate material, a conductive agent (such as conductive carbon black Super P), and a binder (such as polyvinylidene fluoride PVDF) are dispersed in a weight ratio of 95:3:2 in a solvent NMP to form a positive electrode slurry; and the positive electrode slurry is applied to a surface of aluminum foil as a positive electrode current collector, and the positive electrode plate is obtained after drying and cold pressing. A negative electrode active material (such as graphite, which may be artificial graphite, natural graphite, or a mixture of artificial graphite and natural graphite), a conductive agent (such as conductive carbon black Super P), a binder (such as styrene butadiene rubber SBR), and a thickener (such as carboxymethyl cellulose sodium CMC-Na) are dispersed in a weight ratio of 95:2:2:1 in a solvent deionized water to form a negative electrode slurry; and the negative electrode slurry is applied to a surface of copper foil as a negative electrode current collector, and the negative electrode plate is obtained after drying and cold pressing. The positive electrode plate, the negative electrode plate, and the separator are stacked or wound to form an electrode assembly. The electrode assembly is placed in an outer package, an electrolytic solution is added, and the test battery is formed. The electrolytic solution commonly used in the art may be used. For example, equal volumes of ethylene carbonate EC and propylidene carbonate PC are mixed uniformly and added with an electrolyte lithium salt LiPF₆ to obtain the electrolytic solution. A concentration of LiPF₆ in the electrolytic solution may be 1 mol/L. In the test of the discharge plateau voltage of the conjugated carbonyl compound, a test battery may be prepared using the foregoing similar method.

In the test, the charge and discharge voltage range is determined by the characteristics of the battery, for example, by a type of the positive electrode active material. As an example, the charge and discharge scheme may be as follows: at 25°C, the test battery is charged at a constant current rate of 0.33 C to an upper limit cut-off voltage and then charged at a constant voltage to current ≤ 0.05 C, and then the battery is in a fully charged state (100% SOC); the battery is stood for 5 min and then discharged at the constant current rate of 0.33 C to a lower cut-off voltage, and then the battery is in a fully discharged state (0% SOC); and a discharge curve of the battery is drawn to obtain the discharge plateau voltage.

In some embodiments, based on a total mass of the positive electrode active material, a mass percentage of the conjugated carbonyl compound is denoted as a%, wherein 2% ≤ a% ≤ 13%.

When the mass percentage a% of the conjugated carbonyl compound is within the above range, the conjugated carbonyl compound can share in a part of the current in the discharge process, which can significantly extend the discharge plateau of the positive electrode active material, further smooth the decreasing trend of voltage, and further improve the power performance of the secondary battery; moreover, the addition amount of the conjugated carbonyl compound can be coordinated with the amount of lithium supplemented to the negative electrode plate, thereby effectively improving electrochemical performance of the secondary battery. Optionally, 3% ≤ a% ≤ 10%. For example, the mass percentage a% of the conjugated carbonyl compound may be 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12%, 12.5%, 13%, or a range formed from any two above values.

In some embodiments, in a discharge curve of the positive electrode plate relative to graphite at a discharge rate of 0.33 C, a ratio of a discharge plateau capacity of the lithium iron phosphate material to a total discharge capacity of the positive electrode active material is W₁, and 80% ≤ W₁ ≤ 99%.

In the present application, the ratio W₁ of the discharge plateau capacity of the lithium iron phosphate material can be adjusted by adjusting a mass percentage of the lithium iron phosphate material relative to the positive electrode active material, so that the positive electrode active material can be flexibly controlled as required. For example, W₁ may be 80%, 82%, 85%, 86%, 88%, 90%, 91%, 93%, 94%, 95%, 96%, 97%, 98%, 99%, or a range of any two above values.

In some embodiments, in a discharge curve of the positive electrode plate relative to graphite at a discharge rate of 0.33 C, a ratio of a discharge plateau capacity of the conjugated carbonyl compound to a total discharge capacity of the positive electrode active material is W₂, wherein 1% ≤ W₂ ≤ 20%.

In the present application, the ratio W₂ of the discharge plateau capacity of the conjugated carbonyl compound can be adjusted by adjusting the mass percentage of the conjugated carbonyl compound relative to the positive electrode active material, so that the positive electrode active material can be flexibly controlled as required. For example, W₂ may be 1%, 2%, 3%, 4%, 5%, 6%, 8%, 10%, 12%, 15%, 18%, 20%, or a range formed from any two above values.

In the present application, the negative electrode plate may be prepared by using graphite as the negative electrode active material according to the method described earlier, and a battery to be tested may be made by using the positive electrode plate and the negative electrode plate. A discharge curve of the battery to be tested is measured according to the charge and discharge scheme described earlier to obtain a discharge capacity corresponding to the discharge plateau voltage of the conjugated carbonyl compound in the discharge curve, and a ratio of the capacity to the total discharge capacity of the positive electrode active material is calculated.

In some embodiments, a discharge curve of the lithium iron phosphate material relative to graphite at the discharge rate of 0.33 C has a discharge plateau voltage V₁ in V, wherein 3.2 ≤ V₁ ≤ 3.45.

When the lithium iron phosphate material is added to the secondary battery as a component of the positive electrode active material, a lower discharge cut-off voltage of the secondary battery is about 2.5 V at 25°C and 2.0 V below 10°C, which is more beneficial to the synergistic effect of the conjugated carbonyl compound at lower temperatures, enables the discharge plateau of the conjugated carbonyl compound to further smoothen the discharge curve in the discharge process to improve the power performance of the secondary battery, and is also beneficial for the conjugated carbonyl compound to contribute capacity to increase the discharge capacity and a discharge capacity retention rate.

The lithium iron phosphate material may be modified by other materials, such as by doping or by coating.

In some embodiments, the conjugated carbonyl compound includes one or more of compounds with conjugated structures, such as a quinone compound or salt thereof, a conjugated carboxyl compound or salt thereof, a diimide salt, a dianhydride compound, and a rhodizonate.

The conjugated carbonyl compound has lower molecular weight and higher specific capacity, and one of its electrochemical redox reaction mechanisms is: one electron generates a free radical negative ion, and then another electron generates a divalent anion; and two electrons are correspondingly lost in a reverse process to restore its carbonyl structure. Of course, when the conjugated carbonyl compound has a plurality of carbonyl groups, a plurality of electrons can be simultaneously obtained for redox reactions.

For example, the quinone compound or salt thereof includes one or more of benzoquinone, anthraquinone, phenanthrenequinone, 1,4-dibenzoquinonylbenzene, 2,3,5,6-tetrachloro-1,4-benzoquinone, 2,5-dimethoxybenzoquinone, 1,3,4-trihydroxyanthraquinone, 1,5-dilithiumoxyanthraquinone, dipyridinobenzoquinone, dithiophenobenzoquinone, difuranobenzoquinone, nonylbenzohexaquinone, 5,7,12,14-pentaphenyltetraone, and 2,5-dihydroxybenzoquinone dilithium salt.

For example, the conjugated carboxyl compound or salt thereof includes one or more of terephthalic acid, 2,4-dialkenyladipic acid, vinyl dibenzoic acid, terephthalate lithium salt, 2,4-dialkenyladipate lithium salt, and vinyl dibenzoate lithium salt.

For example, the diimide salt includes a diphenylenetetramethylene diimide dilithium salt and/or a naphthalene tetramethylene diimide dilithium salt.

For example, the dianhydride compound includes one or more of pyromellitic anhydride, naphthalene tetracarboxylate dianhydride, and perylene tetracarboxylate dianhydride.

For example, the rhodizonate includes rhodizonic acid dilithium salt and/or rhodizonic acid tetralithium salt.

In some embodiments, a discharge curve of the conjugated carbonyl compound relative to graphite at the discharge rate of 0.33 C has a discharge plateau voltage of V₂ in V, wherein 1.9 ≤ V₂ ≤ 2.9.

When the conjugated carbonyl compound is added to the secondary battery as a component of the positive electrode active material, the discharge curve can be further smoothened in the discharge process to improve the power performance of the secondary battery, and the conjugated carbonyl compound can contribute capacity to increase the discharge capacity and the discharge capacity retention rate. The conjugated carbonyl compound may have one or two discharge plateau voltages, and the V₂ V may refer to an average value of the discharge plateau voltages. For example, 1.9 ≤ V₂ ≤ 2.1, 1.9 ≤ V₂ ≤ 2.3, 1.9 ≤ V₂ ≤ 2.5, 1.9 ≤ V₂ ≤ 2.6, 2.0 ≤ V₂ ≤ 2.5, 2.1 ≤ V₂ ≤ 2.6, 2.1 ≤ V₂ ≤ 2.8, or 2.2 ≤ V₂ ≤ 2.9.

### [Positive electrode plate]

In some embodiments, the positive electrode plate includes a positive electrode current collector and a positive electrode coating disposed on at least one surface of the positive electrode current collector. For example, the positive electrode current collector has two surfaces opposite in its thickness direction, and the positive electrode coating is disposed on either or both of the two opposite surfaces of the positive electrode current collector.

In some embodiments, the positive electrode coating may further optionally include a positive electrode conductive agent. The present application does not specially limit the type of the positive electrode conductive agent. As an example, the positive electrode conductive agent includes one or more of superconducting carbon, conductive graphite, acetylene black, carbon black, Ketjen black, carbon dots, carbon nanotubes, graphene, and carbon nanofibers. In some embodiments, based on the total mass of the positive electrode coating, a mass percentage of the positive electrode conductive agent is 5% or less.

In some embodiments, the positive electrode coating may further optionally include a positive electrode binder. The present application does not specially limit the type of the positive electrode binder. As an example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. In some embodiments, based on the total mass of the positive electrode coating, a mass percentage of the positive electrode binder is 5% or less.

In some embodiments, the positive electrode current collector may be a metal foil or a composite current collector. As an example of the metal foil, an aluminum foil or an aluminum alloy foil may be used. The composite current collector may include a polymer material base layer and a metal material layer formed on at least one surface of the polymer material base layer. As an example, the metal material may include one or more of aluminum, aluminum alloy, nickel, nickel alloy, titanium, titanium alloy, silver and silver alloy, and the polymer material base layer may include one or more of polypropylene (PP), polyethylene terephthalate (PET), polybutylene terephthalate (PBT), polystyrene (PS) and polyethylene (PE).

The positive electrode coating is usually formed by applying a positive electrode slurry on the positive electrode current collector, drying, and cold-pressing. The positive electrode slurry is usually formed by dispersing the positive electrode active material, the optional conductive agent, the optional binder, and any other components in a solvent and stirring uniformly. The solvent may be N-methylpyrrolidone (NMP), but is not limited to this.

### [Negative electrode plate]

The negative electrode plate includes a negative electrode current collector and a negative electrode film disposed on at least one surface of the negative electrode current collector, wherein the negative electrode film includes a negative electrode active material.

As an example, the negative electrolyte current collector has two surfaces opposite in its thickness direction, and the negative electrode film is disposed on either or both of the two opposite surfaces of the negative electrolyte current collector.

In some embodiments, the negative electrode active material may be a negative electrode active material commonly known in the art for batteries. As an example, the negative electrode active material may include at least one of the following materials: artificial graphite, natural graphite, soft carbon, hard carbon, a silicon-based material, a tin-based material, lithium titanate, lithium-aluminum alloy, and the like. The silicon-based material may be selected from at least one of elemental silicon, a silicon oxide compound, a silicon carbon composite, a silicon nitrogen composite, and a silicon alloy. The tin-based material may be selected from at least one of elemental tin, a tin oxide compound, and a tin alloy. However, the present application is not limited to these materials, and other conventional materials that may be used as negative electrode active materials of batteries may alternatively be used. One type of these negative electrode active materials may be used alone, or two or more than two types may be used in combination.

In some embodiments, the negative electrode film may further optionally include a negative electrode binder. The present application does not specially limit the type of the negative electrode binder. As an example, the negative electrode binder may include one or more of styrene butadiene rubber (SBR), water-soluble unsaturated resin SR-1B, water-based acrylic resin (such as polyacrylic acid PAA, polymethyl methacrylate PMAA, polyacrylic acid sodium PAAS), polyacrylamide (PAM), polyvinyl alcohol (PVA), sodium alginate (SA), and carboxymethyl chitosan (CMCS). In some embodiments, based on a total mass of the negative electrode coating, a mass percentage of the negative electrode binder is 5% or less.

In some embodiments, the negative electrode film may further optionally include a negative electrode conductive agent. The present application does not specially limit a type of the negative electrode conductive agent. As an example, the negative electrode conductive agent includes one or more of superconducting carbon, conductive graphite, acetylene black, carbon black, Ketjen black, carbon dots, carbon nanotubes, graphene, and carbon nanofibers. In some embodiments, based on the total mass of the negative electrode coating, a mass percentage of the negative electrode conductive agent is 5% or more.

In some embodiments, the negative electrode film may further optionally include other auxiliaries. As an example, the other auxiliaries may include a thickener, such as carboxymethyl cellulose sodium (CMC-Na) or a PTC thermistor material. In some embodiments, based on the total mass of the negative electrode coating, a mass percentage of the other auxiliaries is 2% or less.

In some embodiments, the negative electrode current collector may be a metal foil or a composite current collector. As an example of the metal foil, a copper foil or a copper alloy foil may be used. The composite current collector may include a polymer material base layer and a metal material layer formed on at least one surface of the polymer material base layer. As an example, the metal material may include one or more of copper, copper alloy, nickel, nickel alloy, titanium, titanium alloy, silver and silver alloy, and the polymer material base layer may include one or more of polypropylene (PP), polyethylene terephthalate (PET), polybutylene terephthalate (PBT), polystyrene (PS) and polyethylene (PE).

The negative electrode film is usually formed by applying a negative electrode slurry on the negative electrode current collector, drying, and cold-pressing. The negative electrode slurry is usually formed by dispersing the negative electrode active material, the optional conductive agent, the optional binder, and the other optional auxiliaries in a solvent and stirring uniformly. The solvent may be N-methylpyrrolidone (NMP) or deionized water, but is not limited to this.

The negative electrode plate does not exclude other additional functional layers besides the negative electrode coating. For example, in some embodiments, the negative electrode plate further includes a protective layer covering the surface of the negative electrode coating.

In some embodiments, the negative electrode plate further includes a lithium supplement layer disposed on the negative electrode coating.

Because the conjugated carbonyl compound almost does not contain a lithium element, it cannot provide a lithium source. Therefore, the lithium supplement layer is disposed on the negative electrode plate to provide a lithium source in the present application. In addition, a lithium supplement amount of the lithium supplement layer may be correlated with a mass of the conjugated carbonyl compound, so that one the one hand, the lithium supplement layer provides the appropriate amount of lithium supplementation, and on the other hand, it will not lead to an excessive amount of lithium supplementation amount, which would otherwise impose a safety burden on the production process. For example, a theoretical demand for the actual addition mass of the conjugated carbonyl compound may be used as 100% lithium supplement, which can provide a sufficient lithium source for the secondary battery and almost does not have adverse effects on process manufacturing and production safety.

As a method for supplementing the negative electrode plate with lithium, a well-known method in the art may be used. For example, the following method may be used: lithium is supplemented to the coated and cold-pressed negative electrode plate through a lithium supplement device, a lithium strip conveying structure in the device is used for conveying a lithium strip, a base material conveying structure is used for conveying the negative electrode plate, the lithium strip and the negative electrode plate are rolled, and then the rolled lithium strip is attached to the surface of the negative electrode plate to complete pre-supplementation of lithium to a negative electrode. Of course, lithium may alternatively be supplemented by other means, which will not be elaborated here.

### [Electrolytic solution]

The electrolytic solution conducts metal ions between the positive electrode plate and the negative electrode plate, and the electrolytic solution in the present application may be an electrolytic solution commonly known in the art for secondary batteries. The electrolytic solution includes a lithium salt and an organic solvent.

As an example, the lithium salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate (LiDFOB), lithium bis(oxalate)borate (LiBOB), lithium difluorophosphate (LiPO₂F₂), lithium difluorobisoxalate phosphate (LiDFOP), and lithium tetrafluorooxalate phosphate (LiTFOP).

As an example, the organic solvent may include one or more of ethylene carbonate (EC), propylidene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylidene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

The electrolytic solution of the present application may be prepared according to a conventional method in the art. For example, an additive, a solvent, an electrolyte salt, and the like may be mixed uniformly to obtain the electrolytic solution. An order of adding the materials is not specially limited. For example, the additive, the solvent, the electrolyte salt, and the like may be added into a non-aqueous solvent and mixed uniformly to obtain a non-aqueous electrolytic solution.

In the present application, each component and its content in the electrolytic solution may be measured according to methods known in the art, such as gas chromatography-mass spectrometry (GC-MS), ion chromatography (IC), liquid chromatography (LC), or nuclear magnetic resonance spectroscopy (NMR).

It should be noted that, when the electrolytic solution of the present application is tested, it may be a newly prepared electrolytic solution or may be obtained from the secondary battery. An exemplary method for obtaining the electrolytic solution from the secondary battery includes the following steps: the secondary battery is discharged to a discharge cut-off voltage (for safety reasons, the battery is generally in a fully discharged state) and centrifuged, and then an appropriate amount of centrifuged liquid, namely, a non-aqueous electrolytic solution, is taken. The non-aqueous electrolytic solution may alternatively be directly obtained from an injection port of the secondary battery.

### [Separator]

In some embodiments, the secondary battery further includes a separator. The present application does not specially limit the type of the separator. The separator may be any known porous separator with good chemical and mechanical stability.

In some embodiments, a material of the separator may be selected from at least one of glass fibers, a non-woven fabric, polyethylene, polypropylene, and polyvinylidene fluoride. The separator may be a single-layer thin film or a multi-layer composite thin film without special limitations. When the separator is a multi-layer composite thin film, materials of various layers may be the same or different without special restrictions.

In some embodiments, the positive electrode plate, the negative electrode plate, and the separator may be prepared into an electrode assembly through a winding process or a stacking process.

In some embodiments, the secondary battery may include an outer package. The outer package may be used for packaging the foregoing electrode assembly and electrolyte.

In some embodiments, the outer package of the secondary battery may be a hard shell, such as a hard plastic shell, an aluminum shell, or a steel shell. The outer package of the secondary battery may alternatively be a soft bag, such as a pocket type soft bag. A material of the soft bag may be plastic, which may be polypropylene, polybutylene terephthalate, poly(butylene succinate), and the like.

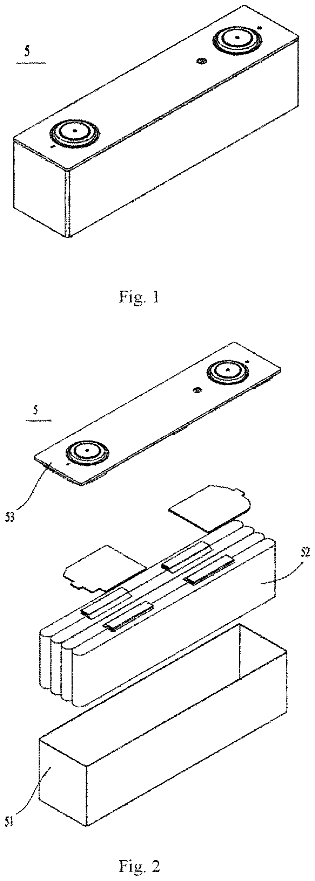

The present application does not have a particular limitation on the shape of the secondary battery. The secondary battery may be cylindrical, cuboid, or in any other shape. Fig. 1 shows a secondary battery 5 with a cuboid structure as an example.

In some embodiments, as shown in Fig. 1 and Fig. 2, the outer package may include a shell 51 and a cover plate 53. The shell 51 may include a bottom plate and side plates connected to the bottom plate, and the bottom plate and the side plates enclose an accommodating cavity. The shell 51 has an opening in communication with the accommodating cavity, and the cover plate 53 is closed to the opening to seal the accommodating cavity. The positive electrode plate, the negative electrode plate, and the separator may be wound or laminated to form an electrode assembly 52. The electrode assembly 52 is packaged in the accommodating cavity. The electrolytic solution infiltrates the electrode assembly 52. The secondary battery 5 includes one or more electrode assemblies 52, which may be adjusted according to requirements.

A method for preparing the secondary battery in the present application is well-known. In some embodiments, the positive electrode plate, the separator, the negative electrode plate, and the electrolytic solution may be assembled to form the secondary battery. As an example, the positive electrode plate, the separator, and the negative electrode plate may form an electrode assembly through a winding or stacking process, the electrode assembly is placed in an outer package and dried, then the electrolytic solution is injected, and the secondary battery is obtained after vacuum packaging, standing, formation, shaping, and other processes.

In some embodiments of the present application, the secondary battery according to the present application may be assembled into a battery module. The battery module may include a plurality of secondary batteries, and a specific quantity may be adjusted according to the application and capacity of the battery module.

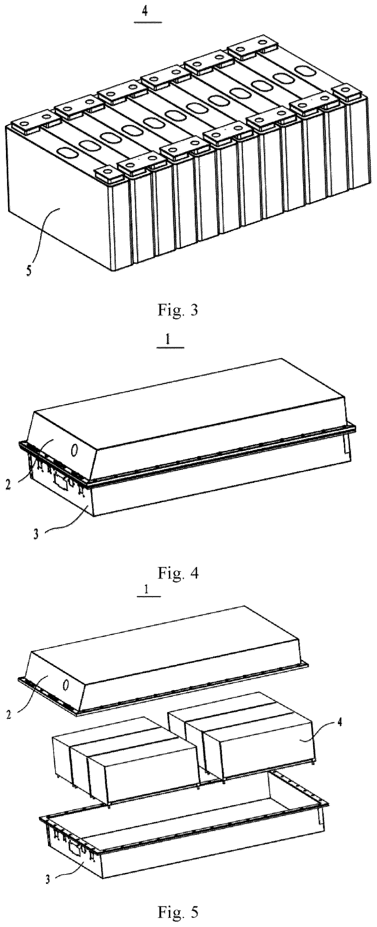

Fig. 3 is a schematic diagram of a battery module 4 as an example. As shown in Fig. 3, in the battery module 4, a plurality of secondary batteries 5 may be arranged in sequence along a length of the battery module 4. Of course, the secondary batteries may alternatively be arranged in any other manner. Further, the plurality of secondary batteries 5 may be fixed by fasteners.

Optionally, the battery module 4 may further include a housing having an accommodating space, and the plurality of secondary batteries 5 are accommodated in the accommodating space.

In some embodiments, the foregoing battery module may alternatively be assembled into a battery pack, and a quantity of the battery module included in the battery pack may be adjusted according to the application and capacity of the battery pack.

Fig. 4 and Fig. 5 are schematic diagrams of a battery pack 1 as an example. As shown in Fig. 4 and Fig. 5, the battery pack 1 may include a battery box and a plurality of battery modules 4 disposed in the battery box. The battery box includes an upper box body 2 and a lower box body 3. The upper box body 2 covers the lower box body 3 to form a closed space for accommodating the battery modules 4. The plurality of battery modules 4 may be arranged in the battery box in any manner.

### Electrical device

In a second aspect, the present application provides an electrical device, comprising at least one of the secondary battery, the battery module, and the battery pack of the present application. The secondary battery, the battery module, and the battery pack may be used as a power source of the electrical device or as an energy storage unit of the electrical device. The electrical device may be, but is not limited to, a mobile device (such as a mobile phone or a notebook computer), an electric vehicle (such as a full electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

The electrical device may include the secondary battery, the battery module, or the battery pack according to its usage requirements.

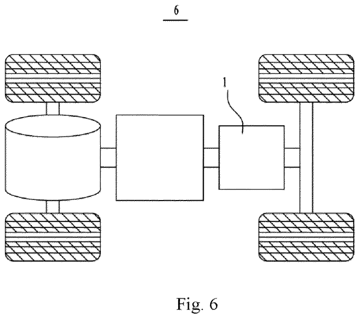

Fig. 6 is a schematic diagram of an electrical device as an example. The electrical device 6 is a full electric vehicle, a hybrid electric vehicle, a plug-in hybrid electric vehicle, or the like. In order to meet the requirements of the electrical device for high power and high energy density, the battery pack 1 or the battery module may be used.

As another example, the electrical device may be a mobile phone, a tablet computer, a notebook computer, or the like. The electrical device is generally required to be thin and light, so the secondary battery may be used as a power source.

### Examples

The following examples more specifically describe the content disclosed in the present application, and these examples are only used for explanatory description, because various modifications and changes made within the scope of the content disclosed in the present application are apparent to those skilled in the art. Unless otherwise stated, all parts, percentages, and ratios described in the following examples are based on weight, all reagents used in the examples are commercially available or synthesized according to conventional methods and can be directly used without further treatment, and all instruments used in the examples are commercially available.

### Example 1

### 1. Preparation of a positive electrode plate

An aluminum foil with a thickness of 12 µm was used as a positive electrode current collector.

A positive electrode active material, a conductive agent carbon black, and a polyvinylidene fluoride (PVDF) binder were fully mixed in a weight ratio of 97.5:1.4:1.1 in an appropriate amount of solvent NMP to form a uniform positive electrode slurry; and the positive electrode slurry was uniformly applied to a surface of the positive electrode current collector aluminum foil to obtain a positive electrode plate after drying and cold pressing.

### 2. Preparation of a negative electrode plate

A copper foil with a thickness of 8 µm was used as a negative electrode current collector.

A negative electrode active material artificial graphite, a styrene butadiene rubber (SBR) binder, a carboxymethyl cellulose sodium (CMC-Na) thickener, and a conductive agent carbon black (Super P) were fully mixed in a weight ratio of 96.2:1.8:1.2:0.8 in an appropriate amount of solvent deionized water to form a uniform negative electrode slurry; and the negative electrode slurry was uniformly applied to a surface of copper foil as the negative electrode current collector to obtain a negative electrode plate after drying and cold pressing.

### 3. Separator

A porous polyethylene (PE) film was used as the separator.

### 4. Preparation of an electrolytic solution

Under an environment with water content less than 10 ppm, non-aqueous organic solvents ethylene carbonate EC and diethyl carbonate DMC were mixed in a volume ratio of 1:1 to obtain an electrolytic solution solvent. Subsequently, a lithium salt was mixed with the mixed solvent to prepare an electrolytic solution with a lithium salt concentration of 1 mol/L.

### 5. Preparation of a secondary battery

The positive electrode plate, the separator, and the negative electrode plate were laminated in sequence to ensure that the separator was located between the positive electrode plate and the negative electrode plate for separation, and then wound to obtain an electrode assembly; and the electrode assembly was placed in an outer package shell and dried, then the electrolytic solution was injected, and a lithium-ion battery was obtained after vacuum packaging, standing, formation, shaping, and other processes.

### Example 2

Secondary batteries in Examples 2-1 to 2-6 were prepared by a method similar to Example 1, except that the mass percentage a% of the conjugated carbonyl compound was adjusted in Examples 2-1 to 2-6.

### Example 3

Secondary batteries in Examples 3-1 and 3-2 were prepared by a method similar to Example 1, except that the type of the conjugated carbonyl compound was adjusted in Examples 3-1 and 3-2.

### Example 4

Secondary batteries in Examples 4-1 to 4-3 were prepared by a method similar to Example 1, except that the lithium supplement amount for the negative electrode plate was adjusted in Examples 4-1 to 4-3.

### Comparative Example 1

A secondary battery in Comparative Example 1 was prepared by a method similar to Example 1, except that no conjugated carbonyl compound was used in Comparative Example 1.

Parameters of the examples and the comparative examples were shown in Table 1.

**Table 1**

| Item | Main material | | Conjugated carbonyl compound | | | | Lithium supplement amount for negative electrode plate |
|---|---|---|---|---|---|---|---|
| | Composition | Mass% | Composition | Mass% | Discharge plateau voltage V₂ V | Ratio of discharge plateau capacity W₂ | |
| Example 1 | LiFePO₄ | 94% | 1,4-dibenzoquinonylbenzene | 6% | 2.4 | 5.10% | 100% |
| Example 2-1 | LiFePO₄ | 98% | 1,4-dibenzoquinonylbenzene | 2% | 2.4 | 1.70% | 100% |
| Example 2-2 | LiFePO₄ | 97% | 1,4-dibenzoquinonylbenzene | 3% | 2.4 | 2.50% | 100% |
| Example 2-3 | LiFePO₄ | 90% | 1,4-dibenzoquinonylbenzene | 10% | 2.4 | 8.50% | 100% |
| Example 2-4 | LiFePO₄ | 87% | 1,4-dibenzoquinonylbenzene | 13% | 2.4 | 11.80% | 100% |
| Example 2-5 | LiFePO₄ | 81% | 1,4-dibenzoquinonylbenzene | 18% | 2.4 | 16.10% | 100% |
| Example 2-6 | LiFePO₄ | 99% | 1,4-dibenzoquinonylbenzene | 1% | 2.4 | 0.80% | 100% |
| Example 3-1 | LiFePO₄ | 94% | Pyromellitic anhydride | 6% | 2.15 | 4.60% | 100% |
| Example 3-2 | LiFePO₄ | 94% | Nonylbenzohexaquinone | 6% | 2.3 | 6.90% | 100% |
| Example 4-1 | LiFePO₄ | 94% | 1,4-dibenzoquinonylbenzene | 6% | 2.4 | 4.50% | 150% |
| Example 4-2 | LiFePO₄ | 94% | 1,4-dibenzoquinonylbenzene | 6% | 2.4 | 3.50% | 50% |
| Example 4-3 | LiFePO₄ | 94% | 1,4-dibenzoquinonylbenzene | 6% | 2.4 | 2.20% | 0 |
| Comparative Example 1 | LiFePO₄ | 100% | None | / | / | / | 0 |

### Tests

### 1. Capacity performance test of the secondary battery

The secondary battery prepared in any of the foregoing examples or comparative examples was stood in a 25°C environment until the temperature of the secondary battery was constant at 25°C, charged at a current rate of 1/3 C to a charge termination voltage, stood for 10 minutes, charged at a current rate of 0.05 C to the charge termination voltage, stood for 10 minutes, and discharged at the current rate of 1/3 C to a discharge termination voltage, and a discharge capacity in this step was recorded as a battery discharge capacity Cn at 25°C @ 0.33 C.

A plateau voltage was determined as follows: a discharge curve was obtained according to discharge data, and the plateau voltage of the conjugated carbonyl compound displayed in the lithium iron phosphate system in the corresponding examples/comparative examples was observed and determined from the discharge curve.

### 2. Low-temperature power test

Maximum power in 10% SOC for 30 s @-10°C was tested as follows:
(1) The secondary battery manufactured in the foregoing examples or comparative examples was stood in a 25°C environment until the temperature of the secondary battery was constant at 25 °C; (2) the battery was charged at a current rate of 1/3 C to a charge termination voltage; (3) the battery was stood for 10 minutes; (4) the battery was charged at a current rate of 0.05 C to the charge termination voltage; (5) the battery was stood for 10 minutes; (6) the battery was discharged at the current rate of 1/3 C to 0.8 Cn to adjust the battery to a 10% SOC; (7) the battery was stood in a -10°C environment until the temperature of the battery was constant at -10°C; (8) the battery was discharged at specific power for 30 s until a discharge cutoff voltage, and a discharge capacitance in this step was recorded as C1; (9) the battery was stood for 5 minutes; and (10) if the voltage in step (8) had reached the discharge cutoff voltage, the power at this time was recorded as the maximum power; if the discharge cutoff voltage was not reached, or if the time to reach the discharge cutoff voltage was less than 30 s, the battery was charged at a current rate of 0.05 C with the same capacity as the discharge capacity C1, namely, the battery was readjusted to the 10% SOC; and after the power was correspondingly increased/ decreased, the discharge in step (8) was repeated until the battery was discharged to the discharge cutoff voltage at 30 s, and the power at this time was recorded as the maximum power.

### 3. -10°C China light-duty vehicle test cycle (CLTC test)

The secondary batteries prepared in any of the foregoing examples or comparative examples were stood in a 25°C environment until the temperature of the secondary battery was constant at 25°C, charged at a current rate of 1/3 C to a charge termination voltage, stood for 10 minutes, charged at a current rate of 0.05 C to the charge termination voltage, stood for 10 minutes, stood in a -10°C environment until the temperature of the battery was constant at -10°C, and discharged according to the battery CLTC process to a discharge termination voltage, and a discharge capacity in this step was recorded as an actual discharge capacity of the battery at -10°C.

A-10°C CLTC discharge capacity retention rate of the cell was calculated as follows: (-10°C CLTC actual discharge capacity/Ah) was divided by (25°C discharge capacity/Ah @ 0.33 C) to obtain the -10°C CLTC discharge capacity retention rate of the cell.

### Test results

The power performance and capacity performance of the secondary battery were improved in the present application as shown in Table 2.

**Table 2**

| Item | Performance of secondary battery | | | |
|---|---|---|---|---|
| | 25 °C discharge capacity/Ah @ 0.33 C | Maximum power in 10% SOC for 30 s @ -10°C | -10°C CLTC discharge capacity/Ah | -10°C CLTC discharge capacity retention rate |
| Example 1 | 188.17 | 956 | 160.3 | 85.20% |
| Example 2-1 | 191.17 | 914 | 152 | 79.50% |
| Example 2-2 | 190.29 | 927 | 155.3 | 81.60% |
| Example 2-3 | 185.68 | 977 | 159.7 | 86.00% |
| Example 2-4 | 183.58 | 992 | 161.2 | 87.80% |
| Example 2-5 | 180.37 | 999 | 158.5 | 87.90% |
| Example 2-6 | 192.05 | 899 | 146.7 | 76.40% |
| Example 3-1 | 187.93 | 937 | 156.7 | 83.40% |
| Example 3-2 | 195.13 | 967 | 167 | 85.60% |
| Example 4-1 | 188.17 | 939 | 156.7 | 83.30% |
| Example 4-2 | 187.19 | 925 | 153.3 | 81.90% |
| Example 4-3 | 185.43 | 894 | 146.3 | 78.90% |
| Comparative Example 1 | 192.5 | 893 | 146.7 | 76.20% |

It can be seen from Table 2 that, because no conjugated carbonyl compound was added in Comparative Example 1, the capacity may decay rapidly in the discharge process, resulting in poor power performance of the secondary battery. In the examples of the present application, the conjugated carbonyl compound was added to the lithium iron phosphate material of the positive electrode active material, and the two achieved a synergistic effect to smoothen the discharge curve, so that the discharge capacity increased stably, which was beneficial to improving the power performance of the secondary battery. It can be seen from Examples 1 to 2-6 that the discharge capacity retention rate of the secondary battery was increased as the content of conjugated carbonyl compound increased. However, the overall discharge capacity was good when the ratio of the lithium iron phosphate material to the conjugated carbonyl compound was within the specific range (such as in Examples 1, 2-2, and 2-3).

It can be seen from Examples 1 and 4-1 to 4-3 that the supplementation of lithium to the secondary battery system can effectively improve the discharge capacity and power performance of the secondary battery. However, when the lithium supplement amount was excessive, such as greater than 100%, for example, when the lithium supplement amount was greater than 8 mg/1540.25 mm², the discharge capacity and power performance will not be further improved.

Although the present application is described with reference to the preferred embodiments, various improvements can be made and equivalents can be substituted for components therein without departing from the scope of the present application. In particular, as long as there is no structural conflict, various technical features mentioned in the embodiments may be combined in any manner. The present application is not limited to the specific embodiments disclosed herein, but includes all technical solutions falling within the scope of the claims.

## Claims

1. A secondary battery, comprising a positive electrode plate, a negative electrode plate, and a separator disposed between the positive electrode plate and the negative electrode plate, wherein the positive electrode plate comprises a positive electrode coating containing a positive electrode active material comprising a lithium iron phosphate material and a conjugated carbonyl compound.

2. The secondary battery according to claim 1, wherein
based on a total mass of the positive electrode active material, a mass percentage of the conjugated carbonyl compound is denoted as a%, wherein 2% ≤ a% ≤ 13%, and optionally, 3% ≤ a% ≤ 10%.

3. The secondary battery according to claim 1 or 2, wherein
on a discharge curve of the positive electrode plate relative to graphite at a discharge rate of 0.33 C, a ratio of a discharge plateau capacity of the lithium iron phosphate material to a total discharge capacity of the positive electrode active material is W₁, wherein 80% ≤ W₁ ≤ 99%; and/or
on a discharge curve of the positive electrode plate relative to graphite at a discharge rate of 0.33 C, a ratio of a discharge plateau capacity of the conjugated carbonyl compound to a total discharge capacity of the positive electrode active material is W₂, wherein 1% ≤ W₂ ≤ 20%.

4. The secondary battery according to any one of claims 1 to 3, wherein
a discharge curve of the lithium iron phosphate material relative to graphite at the discharge rate of 0.33 C has a discharge plateau voltage V₁ in V, wherein 3.2 ≤ V₁ ≤ 3.45.

5. The secondary battery according to any one of claims 1 to 4, wherein a discharge curve of the conjugated carbonyl compound relative to graphite at the discharge rate of 0.33 C has a discharge plateau voltage of V₂ in V, wherein 1.9 ≤ V₂ ≤ 2.9.

6. The secondary battery according to any one of claims 1 to 5, wherein
the conjugated carbonyl compound comprises one or more of a quinone compound or salt thereof, a conjugated carboxyl compound or salt thereof, a diimide salt, a dianhydride compound, and a rhodizonate;
optionally, the quinone compound or salt thereof comprises one or more of benzoquinone, anthraquinone, phenanthrenequinone, 1,4-dibenzoquinonylbenzene, 2,3,5,6-tetrachloro-1,4-benzoquinone, 2,5-dimethoxybenzoquinone, 1,3,4-trihydroxyanthraquinone, 1,5-dilithiumoxyanthraquinone, dipyridinobenzoquinone, dithiophenobenzoquinone, difuranobenzoquinone, nonylbenzohexaquinone, 5,7,12,14-pentaphenyltetraone, and 2,5-dihydroxybenzoquinone dilithium salt;
the conjugated carboxyl compound or salt thereof comprises one or more of terephthalic acid, 2,4-dialkenyladipic acid, vinyl dibenzoic acid, terephthalate lithium salt, 2,4-dialkenyladipate lithium salt, and vinyl dibenzoate lithium salt;
the diimide salt comprises a diphenylenetetramethylene diimide dilithium salt and/or a naphthalene tetramethylene diimide dilithium salt;
the dianhydride compound comprises one or more of pyromellitic anhydride, naphthalene tetracarboxylate dianhydride, and perylene tetracarboxylate dianhydride; and
the rhodizonate comprises rhodizonic acid dilithium salt and/or rhodizonic acid tetralithium salt.

7. The secondary battery according to any one of claims 1 to 6, wherein
the negative electrode plate comprises a negative electrode coating containing a negative electrode active material comprising one or more of artificial graphite, natural graphite, soft carbon, hard carbon, a silicon-based material, a tin-based material, lithium titanate, and a lithium-aluminum alloy.

8. The secondary battery according to claim 7, wherein the negative electrode plate further comprises a lithium supplement layer disposed on the negative electrode coating.

9. A battery module, comprising the secondary battery according to any one of claims 1 to 8.

10. A battery pack, comprising the battery module according to claim 9.

11. An electrical device, comprising the secondary battery according to any one of claims 1 to 8, the battery module according to claim 9, or the battery pack according to claim 10.
